# EUROPÄISCHE PATENTSCHRIFT

(11) **EP 2 627 473 B1**
(45) Veröffentlichungstag und Bekanntmachung des Hinweises auf die Patenterteilung: **06.06.2018**
(21) Anmeldenummer: 11817263.4
(22) Anmeldetag: 11.10.2011
(51) Int. Cl.: B23P 11/00, B25B 11/00, F16C 3/02, F16C 3/10, B23P 15/00, B23P 19/02, F01L 1/047, F16H 53/02

(54) **FERTIGUNG EINER FUNKTIONSWELLE**
PRODUCTION OF A FUNCTIONAL SHAFT
FABRICATION D'UN ARBRE FONCTIONNEL

(30) Priorität: 12.10.2010 DE 102010048225
(43) Veröffentlichungstag der Anmeldung: 21.08.2013
(73) Patentinhaber: Neumayer Tekfor Engineering GmbH, 77756 Hausach (DE)
(72) Erfinder: GREMMELSPACHER, Christoph, 77716 Haslach (DE); SCHULER, Markus, 77709 Oberwolfach (DE); ECHLE, Joachim, 77709 Oberwolfach (DE)
(86) Internationale Anmeldenummer: PCT/DE2011/001835
(87) Internationale Veröffentlichungsnummer: WO 2012/051991

(56) Entgegenhaltungen:
- EP-A1- 1 741 945
- EP-A2- 1 155 770
- WO-A1-01/12956
- WO-A2-2012/013175
- DE-A1-102007 056 638
- GB-A- 2 256 468
- JP-A- 8 110 275

## Beschreibung

Die Erfindung bezieht sich auf ein Verfahren zur Fertigung einer Funktionswelle. Ein Beispiel für eine Funktionswelle ist eine Nockenwelle. Es kann sich jedoch auch um andere Wellen, z.B. mit Zahnrädern handeln.

Eine Nockenwelle verfügt zumindest über ein Trägerelement, auch als Rohr oder Welle bezeichnet, und mindestens einen Nocken. Bei der Anwendung in Motoren dienen Nockenwellen als Teil des Ventiltriebes, wobei sich das Trägerelement um seine Längsachse dreht. Die Nocken wandeln die Drehbewegung in Längsbewegungen um, wodurch die Ein- und Auslassventile des Motors gesteuert werden. Im Stand der Technik sind bereits unterschiedliche Varianten von Nockenwellen, deren Bestandteilen oder des Herstellungsverfahrens bekannt. Die WO 01/12956 A1 beschreibt eine gebaute Nockenwelle, bei welcher die Nocken und sonstigen Funktionselemente separat gefertigt und auf die Welle einzeln aufgeschoben werden. In den Schriften DE 10 2007 056 638 A1 und EP 1 155 770 A2 wird beschrieben, dass mehrere Funktionselemente hintereinander angeordnet werden und dass die Welle durch die Aussparungen der Funktionselemente hindurchgeführt wird.

Die Druckschrift JP 8 110275 A offenbart einen Aufbau für die Fertigung einer Nockenwelle. Dabei wird mit zwei seitlich angeordneten Weggebern gemessen, um welches Maß eine teilweise gerändelte Trägerwelle einen Nocken beim Einbringen des gerändelten Abschnitts aufweitet.

Fertigungsverfahren, bei denen Nocken einzeln auf Wellen aufgebracht werden, offenbaren die Druckschriften EP 1 741 945 A1 und GB 2 256 468 A. Dabei wird jeweils ein Zusammenhang zwischen der auf die bewegten Nocken ausgeübten Kraft und der damit erzielten Stärke der Verbindung zwischen Nocken und Welle genannt.

Die Druckschrift EP 1 155 770 A2 beschreibt ein Montageverfahren, in welchem mehrere Funktionselemente gemäß ihrer Endposition in ein Gehäuse eingebracht werden und eine Welle hindurch geschoben wird.

Der Erfindung liegt die Aufgabe zugrunde, ein Verfahren zur Fertigung von Funktionswellen vorzuschlagen, welches möglichst effektiv und zuverlässig ist.

Die Aufgabe wird erfindungsgemäß durch ein Verfahren mit den Merkmalen des Patentanspruchs 1 gelöst.

Die Messung der Kraft, welche auf das Funktionselement wirkt, geschieht mittelbar, indem die Kraft gemessen wird, welche auf das Halteelement wirkt. In einer Variante wird beim und/oder vor dem Einbringen der Welle in die Aussparungen der Funktionselemente zwischen Welle und Funktionselemente mindestens ein Fügemittel eingebracht.

Das Verfahren ist dadurch vereinfacht, dass viele Funktionselemente auf einmal auf die Welle aufgebracht werden. Die Welle wird z.B. auf Block gefertigt, d.h. die Welle wird beispielsweise soweit eingebracht, bis sie eine Anschlagfläche erreicht. In einer Ausgestaltung werden alle Funktionselemente in einem Arbeitsschritt auf die Welle aufgebracht. Das Fügen wird mit der Kraftmessung überwacht. Die Winkelstellung bezieht sich dabei auf die radiale Orientierung der Funktionselemente.

Eine Ausgestaltung des erfindungsgemäßen Verfahrens sieht vor, dass die gemessene Kraft mit mindestens einem Sollwert verglichen wird. Die Messwerte werden mit vorgegebenen Sollwerten ggf. unter Beachtung vorgegebener Toleranzbereiche verglichen. Somit können Aussagen über die Qualität der gefertigten Welle getätigt werden bzw. der Fügevorgang kann verbessert werden.

Für die Ermittlung des Drehmoments, welches von der Welle und dem jeweiligen Funktionselement mindestens übertragbar ist, können beispielsweise hinterlegte Referenzmessungen herangezogen werden. Weiterhin werden ggf. die Daten über den Außendurchmesser der Welle, sowie den Durchmesser der Aussparungen der Funktionselemente herangezogen.

Eine Ausgestaltung des erfindungsgemäßen Verfahrens beinhaltet, dass als Funktionswelle eine Nockenwelle gefertigt wird.

Eine Kraftmesseinheit zur Messung einer von der Welle auf das Halteelement wirkenden Kraft weist in einer Ausgestaltung mindestens ein piezoelektrisches Element auf. Alternativ oder ergänzend ist ein Dehnungsmessstreifen vorgesehen.

Die Erfindung wird anhand der Figuren näher erläutert. Dabei zeigen:
Fig. 1: eine Nockenwelle, und
Fig. 2: einen Schnitt durch eine schematische Darstellung einer Halteeinheit.

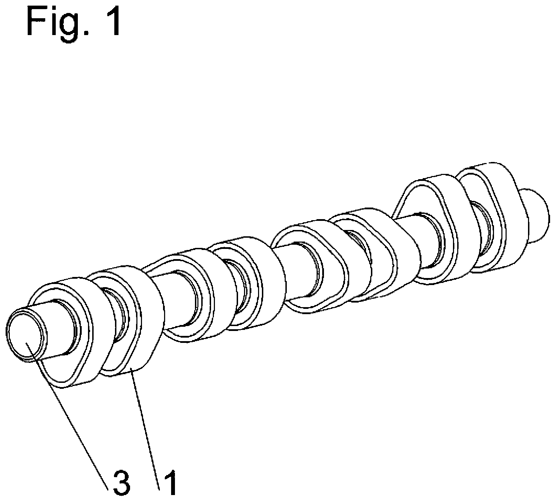

In der Fig. 1 ist eine Nockenwelle als Beispiel für eine Funktionswelle dargestellt. Auf der Welle 3 sind dabei die separat gefertigten Nocken als Beispiele für die Funktionselemente 1 mit unterschiedlichen Winkelstellungen (zu erkennen an den unterschiedlich radial orientierten Spitzen) aufgebracht. Weitere Funktionselemente 1 können z.B. Lager oder Zahnräder sein. Die axiale Anordnung der Funktionselemente 1 bei der Fertigung bezieht sich somit beispielsweise auf die Längsachse der Welle 3.

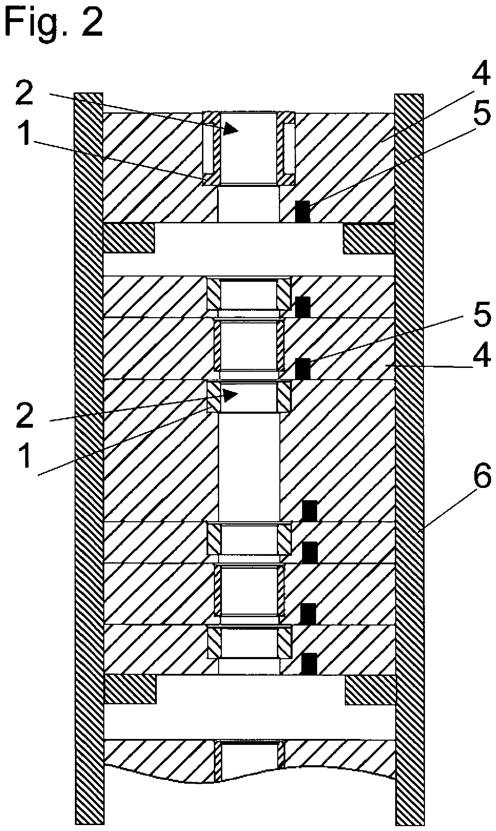

In der Fig. 2 ist schematisch eine Vorrichtung zur Fertigung von Funktionswellen dargestellt. In die Halteelemente 4, die in einem Rahmen 6 angebracht sind, werden die Funktionselemente 1 - zumindest zwei, vorzugsweise alle, die mit der erfindungsgemäßen Methode auf die Welle aufgebracht werden - unter Festlegung des axialen Abstandes und der Winkelstellung eingebracht. Bei den Funktionselementen 1 handelt es sich beispielsweise um Nocken oder Lager. Die Aussparungen 2 der Funktionselemente 1 sind dabei fluchtend hintereinander angeordnet. Verbunden werden die Funktionselemente 1 mit der Welle, indem die Welle durch die Aussparungen geführt wird. Durch die Kraftmesseinheiten 5 wird die Kraft gemessen, welche von der Welle auf die Funktionselemente 1 bzw. auf die Halteelemente 4 wirkt. In einer zusätzlichen Ausgestaltung ist mindestens ein Halteelement 4 mit mehr als einer Kraftmesseinheit 5 versehen. Die Messwerte werden anschließend z.B. gespeichert und/oder mit Sollwerten verglichen. Beispielsweise aufgrund von hinterlegten Daten, welche den Zusammenhang zwischen der aufgebrachten Kraft und dem damit verbundenen übertragbaren Minimaldrehmoment herstellen, und ggf. in Abhängigkeit von der Geometrie der Welle (z.B. der Außendurchmesser) und der Funktionselemente (z.B. der Durchmesser der Aussparungen) kann dann auch auf das Drehmoment geschlossen werden, welches mindestens von Welle und Funktionselement übertragbar ist. Dieser Wert sollte mindestens dem Minimaldrehmoment entsprechen, welcher von der Welle bzw. den Nocken als Funktionselementen übertragen werden muss. Weiterhin erlaubt die Vielzahl der unabhängig voneinander messenden Kraftmesseinheiten 5 auch die dynamische Messung eines Kraft-Weg-Verhaltens. So lässt sich z.B. auch der Effekt verfolgen, dass die Funktionselemente, in deren Aussparungen die Welle früher eingebracht wird, einer höheren Belastung unterliegen als Funktionselemente, in deren Aussparungen die Welle später oder erst zum Schluss eingebracht wird.

## Patentansprüche

1. Verfahren zur Fertigung einer Funktionswelle,
welches Verfahren zumindest folgende Schritte aufweist:
dass mindestens zwei mit jeweils mindestens einer Aussparung (2) versehene Funktionselemente (1) mit einer vorgebbaren Winkelstellung und mit einem vorgebbaren axialen Abstand zueinander axial hintereinander in jeweils ein Halteelement (4) eingebracht werden,
dass mindestens eine Welle (3) in die Aussparungen (2) der Funktionselemente (1) eingebracht wird,
dass jeweils mindestens eine Kraft im Nebenschluss gemessen wird, welche während des Einbringens der Welle (3) in die Aussparungen (2) der Funktionselemente (1) auf jeweils mindestens ein Funktionselement (1) ausgeübt wird, indem eine Kraft gemessen wird, welche auf das jeweilige Halteelement (4) ausgeübt wird, und
dass ausgehend von der jeweils gemessenen Kraft das Drehmoment ermittelt wird, welches von der Welle (3) und dem jeweiligen Funktionselement (1) mindestens übertragbar ist.

2. Verfahren nach Anspruch 1,
**dadurch gekennzeichnet,**
**dass** die gemessene Kraft mit mindestens einem Sollwert verglichen wird.

3. Verfahren nach Anspruch 1 oder 2,
**dadurch gekennzeichnet,**
**dass** als Funktionswelle eine Nockenwelle gefertigt wird.

## Claims

1. Method for the production of a function shaft,
which method comprises at least the following steps:
that at least two functional elements (1), each provided with at least one recess (2) and having a predefined angular position and with a predefined axial distance to each other, have a retaining element (4) inserted axially one behind the other,
that at least one shaft (3) is inserted in the recesses (2) of the functional elements (1),
that at least one force is measured in the shunt circuit, which is exerted on at least one functional element (1) during the insertion of the shaft (3) into the recesses (2) of the functional elements (1) by measuring a force which is exerted on the respective holding element (4), and
that the torque which is at least transmittable by the shaft (3) and the respective functional element (1) is determined from the respectively measured force.

2. Method according to Claim 1,
**characterized by the fact that**
the measured force is compared with at least one setpoint.

3. Method according to Claim 1 or 2,
**characterized by the fact that**
a camshaft is manufactured as a functional shaft

## Revendications

1. Procédé de fabrication d'un arbre à cames,
avec au moins les quatre étapes suivantes :
au moins deux éléments fonctionnels (2) dotés d'un évidement (1) avec un angle à position programmable et une distance axiale programmable sont installés successivement dans un élément de support (4) au moins un arbre (3) est installé dans les évidements (2) des éléments fonctionnels (1),
au moins une force est mesurée dans un circuit de dérivation exercée durant l'insertion de l'arbre (3) dans les évidements (2) des éléments fonctionnels (1) sur un élément fonctionnel minimum (1), où une force exercée sur l'élément en support en question (4) est mesurée et
le couple transmissible de l'arbre (3) et de l'élément de fonction (1) est déterminé en fonction de la force mesurée.

2. Procédé selon revendication 1,
**caractérisé en ce que**
la force mesurée est comparée avec une valeur de consigne minimum.

3. Procédé selon revendication 1 ou 2,
**caractérisée en ce que**
l'arbre fonctionnel fabriqué est un arbre à cames.
